# FASCICULE DE BREVET EUROPEEN

(11) **EP 0 748 708 B1**
(45) Date de publication et mention de la délivrance du brevet: **23.05.2001**
(21) Numéro de dépôt: 96109280.6
(22) Date de dépôt: 10.06.1996
(51) Int. Cl.: B60H 1/00, F28D 1/04, F28F 9/26

(54) **Dispositif de chauffage et/ou de climatisation de l'habitacle d'un véhicule automobile**
Vorrichtung zur Heizung und /oder Klimatisierung eines Fahrzeuginnenraumes
Device for heating and/or air-conditioning the interior of a vehicle

(30) Priorité: 13.06.1995 FR 9507003
(43) Date de publication de la demande: 18.12.1996
(73) Titulaire: VALEO CLIMATISATION, 78320 Le Mesnil Saint-Denis (FR)
(72) Inventeur: Danieau, Jacques, 78590 Noisy Le Roi (FR)

(56) Documents cités:
- EP-A- 0 214 605
- WO-A-93/14361
- FR-A- 2 580 558
- FR-A- 2 592 146

## Description

L'invention concerne un dispositif de chauffage et/ou de climatisation de l'habitacle d'un véhicule automobile.

Les dispositifs connus de ce genre comprennent, pour la plupart, des moyens pour mélanger, en proportions réglables, un flux d'air froid et un flux d'air chaud afin de régler la température de l'air soufflé dans l'habitacle.

Le flux d'air froid et le flux d'air chaud proviennent d'une même source d'air froid, le flux d'air chaud étant obtenu par réchauffage au travers d'un échangeur de chaleur, encore appelé "radiateur", parcouru par un fluide caloporteur, habituellement le liquide de refroidissement du moteur du véhicule.

Dans de tels dispositifs, il est prévu un volet de mélange, placé en amont de l'échangeur de chaleur, pour doser la répartition du flux d'air froid et du flux d'air chaud entre eux.

Ces dispositifs connus, comme il est décrit par example dans le document FR-A-2 580 558 qui représent le préambule de la revendication 1, sont généralement satisfaisants et ont pour avantage notamment d'offrir un temps de réponse presque immédiat à la suite d'un changement de consigne, ce qui permet à l'utilisateur d'ajuster avec précision le niveau de confort souhaité.

Toutefois, de tels dispositifs ont pour inconvénient de nécessiter un boîtier volumineux pour recevoir le volet de mélange et permettre en outre le passage et le mélange du flux d'air froid et du flux d'air chaud.

Ces dispositifs connus sont donc particulièrement encombrants et occupent un espace volumineux sous la planche de bord du véhicule.

Cet encombrement constitue un inconvénient sérieux pour certains types de véhicules dans lesquels le groupe motopropulseur a tendance à empiéter sur l'habitacle, ce qui entraîne la suppression de l'auvent situé habituellement sous le pare-brise.

L'invention a notamment pour but de surmonter cet inconvénient.

Elle propose à cet effet un dispositif de chauffage et/ou de climatisation de l'habitacle d'un véhicule automobile, lequel comprend selon la revendication 1 :
- un conduit supérieur et un conduit inférieur superposés, alimentés en parallèle par une entrée d'air commune,
- un échangeur de chaleur supérieur et un volet supérieur mobile occupant respectivement deux parties complémentaires d'une section transversale du conduit supérieur,
- un échangeur de chaleur inférieur et un volet inférieur mobile occupant respectivement deux parties complémentaires d'une section transversale du conduit inférieur,
- au moins une chambre de sortie alimentée par le conduit supérieur et par le conduit inférieur, et
- des buses de distribution d'air alimentées par la chambre de sortie et débouchant en des endroits choisis de l'habitacle.

On obtient ainsi un dispositif de faible encombrement dont l'implantation générale est verticale, ce qui lui permet d'être intégré dans une zone centrale du véhicule, en utilisant la console du véhicule comme logement de la totalité du dispositif.

Le conduit supérieur et le conduit inférieur, qui sont superposés verticalement, logent respectivement l'échangeur de chaleur supérieur et l'échangeur de chaleur inférieur, lesquels sont également superposés verticalement.

Le conduit supérieur et le conduit inférieur permettent de diffuser de l'air traité, froid ou réchauffé, dans des régions spécifiques différentes de l'habitacle.

Dans le conduit supérieur, le volet supérieur peut être déplacé entre une position fermée dans laquelle tout le flux d'air passe par l'échangeur de chaleur supérieur et une position ouverte dans laquelle le flux d'air passe à la fois à travers l'échangeur de chaleur supérieur et à travers la section correspondante du volet.

De même, le volet inférieur peut être déplacé entre une position fermée dans laquelle tout le flux d'air passe par l'échangeur de chaleur inférieur et une position ouverte dans laquelle le flux d'air passe à la fois à travers l'échangeur de chaleur inférieur et à travers la section correspondante du volet.

Dans une forme de réalisation préférée de l'invention, le dispositif comprend une chambre de sortie supérieure et une chambre de sortie inférieure alimentées respectivement par le conduit supérieur et par le conduit inférieur, un volet de séparation étant prévu pour ouvrir ou fermer une communication entre les deux chambres de sortie.

Ceci permet, soit d'isoler les deux chambres de sortie, soit de faire passer le flux d'air d'une des chambres de sortie dans l'autre, et inversement.

Avantageusement, ce volet de séparation est formé par le volet inférieur, lequel ouvre ou ferme la communication entre les deux chambres de sortie lorsqu'il ferme ou respectivement ouvre la partie de la section transversale du conduit inférieur qu'il occupe.

Avantageusement, la chambre de sortie supérieure alimente des buses d'aération au moyen d'un volet d'aération réglable.

De préférence, les buses d'aération comprennent des buses d'aération placées à l'avant de l'habitacle et des buses d'aération placées à l'arrière de l'habitacle.

Avantageusement, la chambre de sortie inférieure alimente des buses de dégivrage/désembuage de vitres ainsi que des buses de chauffage, au moyen d'un volet de répartition commun.

Les buses de dégivrage/désembuage peuvent être orientées vers la base du pare-brise et/ou vers des glaces latérales du véhicule.

Les buses de chauffage sont avantageusement orientées vers la partie basse de l'habitacle et comprennent des buses situées vers l'avant de l'habitacle et d'autres situées vers l'arrière.

Dans une forme de réalisation préférée de l'invention, l'échangeur de chaleur supérieur et l'échangeur de chaleur inférieur sont parcourus par un même fluide caloporteur, tel que le liquide de refroidissement du moteur du véhicule.

Avantageusement, l'échangeur de chaleur supérieur et l'échangeur de chaleur inférieur sont montés en série dans un même circuit du fluide caloporteur et il est prévu un robinet hacheur propre à régler le débit du fluide caloporteur parcourant les deux échangeurs et par conséquent la température du flux d'air.

Cette solution permet de faire l'économie d'un volet de mélange nécessitant un environnement volumineux.

Selon une autre caractéristique de l'invention, le dispositif comprend un calculateur recevant un signal de température d'une sonde de température placée en aval de l'échangeur de chaleur inférieur, ce calculateur pilotant le robinet hacheur et la commande de l'un au moins des volets supérieur et inférieur.

Dans une forme de réalisation de l'invention, le calculateur pilote le volet supérieur et le volet inférieur par l'intermédiaire de micro-moteurs.

Dans une autre forme de réalisation de l'invention, le calculateur pilote uniquement le volet inférieur par l'intermédiaire d'un micro-moteur, tandis que le volet supérieur est relié à une commande manuelle et contrôle l'accès à un conduit spécifique débouchant directement dans des conduits d'aération logés dans la planche de bord.

Selon une autre caractéristique de l'invention, l'échangeur de chaleur supérieur, l'échangeur de chaleur inférieur, ainsi que le volet supérieur et le volet inférieur, sont réalisés sous la forme d'un module, ce qui permet de réaliser un ensemble compact facilitant en outre la maintenance du dispositif.

Avantageusement, le module comprend :
- un élément inférieur intermédiaire qui est propre à être interposé entre une boîte collectrice supérieure de l'échangeur de chaleur inférieur et une boîte collectrice inférieure de l'échangeur de chaleur supérieur, qui définit un passage d'air, qui porte à pivotement le volet inférieur pour contrôler ledit passage d'air inférieur et qui comprend deux passages de fluide reliant les deux boîtes collectrices précitées, et
- un élément supérieur qui est propre à être monté sur une boîte collectrice supérieure de l'échangeur de chaleur supérieur, qui définit un passage d'air supérieur, et qui porte à pivotement le volet supérieur pour contrôler ledit passage d'air supérieur.

Ainsi, le fluide caloporteur pénètre dans l'un des deux échangeurs de chaleur, gagne l'autre échangeur de chaleur au travers d'un des passages de fluide de l'élément inférieur, pour regagner le premier échangeur de chaleur au travers de l'autre passage de fluide et quitter enfin cet échangeur de chaleur.

Avantageusement, le fluide caloporteur pénètre d'abord dans l'échangeur de chaleur inférieur et quitte finalement cet échangeur de chaleur inférieur grâce à des ouvertures d'admission et de sortie prévues dans une boîte à eau inférieure de l'échangeur de chaleur inférieur.

Avantageusement, l'élément inférieur est réalisé sous la forme d'un cadre ouvert qui comprend :
une plaque inférieure adaptatrice propre à être immobilisée contre la boîte collectrice supérieure de l'échangeur de chaleur inférieur,
une plaque supérieure adaptatrice propre à être immobilisée contre la boîte collectrice inférieure de l'échangeur de chaleur supérieur,
deux flasques latéraux reliant entre elles les plaques supérieure et inférieure pour définir avec elles le passage d'air inférieur,
deux conduits de passage de fluide caloporteur interposés entre les plaques inférieure et supérieure, et
des paliers supports du volet inférieur.

Selon une autre caractéristique de l'invention, l'élément supérieur est réalisé sous la forme d'un cadre ouvert qui comprend :
une plaque inférieure adaptatrice propre à être immobilisée contre la boîte collectrice supérieure de l'échangeur de chaleur supérieur,
une plaque supérieure opposée,
deux flasques latéraux reliant entre elles les deux plaques inférieure et supérieure pour définir avec elles le passage d'air supérieur, et
des paliers supports du volet supérieur.

Dans la description qui suit, faite seulement à titre d'exemple, on se réfère aux dessins annexés, sur lesquels :
- la figure 1 est une vue en coupe transversale d'un dispositif selon l'invention implanté dans la console d'un véhicule automobile, le dispositif étant représenté dans un premier mode de fonctionnement;
- les figures 2, 3 et 4 sont des vues analogues à celles de la figure 1 pour d'autres modes de fonctionnement du dispositif;
- la figure 5 est une vue en perspective d'un module thermique propre à faire partie d'un dispositif selon l'invention;
- la figure 6 est une vue partielle, à échelle agrandie, d'une partie du module de la figure 5;
- la figure 7 est une vue en coupe correspondant à la figure 6;
- la figure 8 est une vue partielle, à échelle agrandie, d'une autre partie du module de la figure 5; et
- la figure 9 est une vue en coupe correspondant à la figure 8;
- la figure 10 est une vue partielle en perspective d'un autre module thermique dans une variante de réalisation; et
- la figure 11 est une vue en coupe transversale d'une partie du dispositif dans le cas où il est équipé du module de la figure 10.

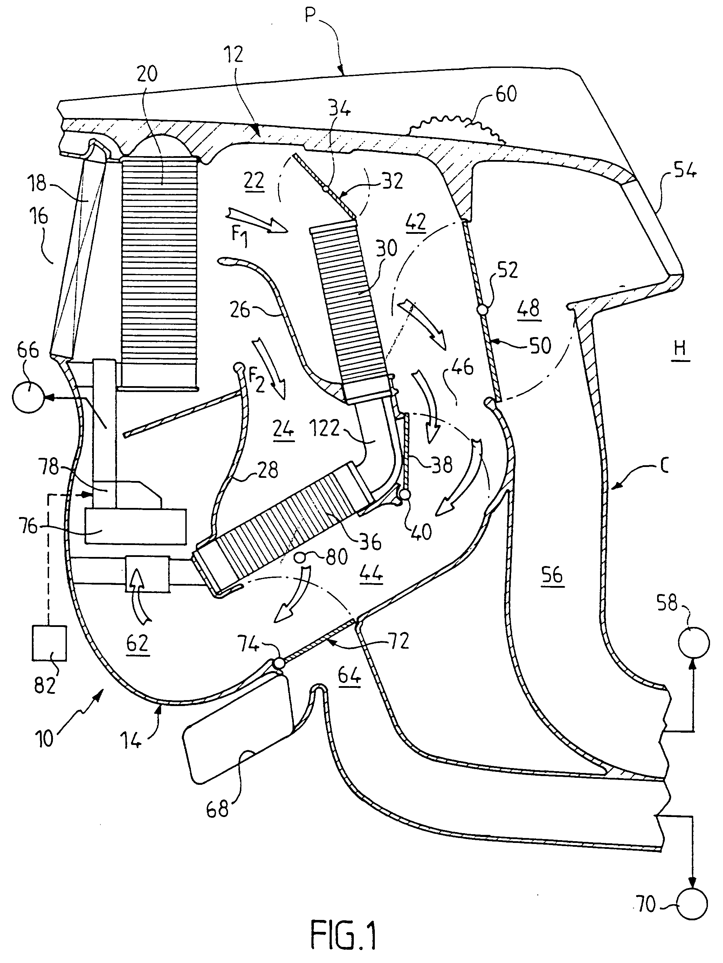

On se réfère tout d'abord à la figure 1 qui représente un dispositif 10 selon l'invention logé dans la console C et en partie sous la planche de bord P d'un véhicule automobile pour envoyer un flux d'air traité, froid ou chaud, dans des régions choisies de l'habitacle H.

Le dispositif 10 comprend un boîtier délimité principalement par une paroi supérieure 12 sensiblement plane et une paroi inférieure 14 à configuration générale en U.

Le dispositif 10 comprend une entrée d'air 16 propre à recevoir de l'air extérieur et/ou de l'air intérieur recirculé à partir de l'habitacle. En aval de l'entrée d'air sont disposés successivement un filtre 18 et un évaporateur 20 (dans le cas où le véhicule est équipé de l'option climatisation).

L'air issu de l'évaporateur est partagé entre un flux F1 pénétrant dans un conduit supérieur 22 et un flux F2 pénétrant dans un conduit inférieur 24, les deux conduits étant superposés verticalement.

Le conduit supérieur 22 est délimité vers le haut par la paroi supérieure 12 et vers le bas par une cloison 26. Le conduit inférieur 24 est délimité vers le haut par la cloison 26 et vers le bas et vers l'arrière par une cloison postérieure 28.

Le conduit supérieur 22 loge un échangeur de chaleur supérieur 30 et un volet supérieur mobile 32, du type papillon, monté pivotant autour d'un axe 34. L'échangeur 30 et le volet 32 occupent respectivement deux parties complémentaires d'une section transversale rectangulaire du conduit supérieur 22, le volet 32 étant disposé au-dessus de l'échangeur de chaleur 22. Dans la position représentée à la figure 1, le volet 32 est dans une position fermée, si bien que tout le flux d'air F1 passe au travers de l'échangeur 30.

Le conduit inférieur 24 loge un échangeur de chaleur inférieur 36 et un volet inférieur mobile 38, du type drapeau, monté pivotant autour d'un axe 40. L'échangeur 36 et le volet 38 occupent respectivement deux parties complémentaires d'une section transversale rectangulaire du conduit inférieur 24, le volet 38 étant situé au-dessus de l'échangeur 36. Dans la position de la figure 1, le volet 38 est dans une position de fermeture du conduit 24, si bien que tout le flux F2 passe au travers de l'échangeur 36.

Comme on le voit sur la figure 1, la section du conduit 22 dans laquelle sont placés l'échangeur 30 et le volet 32 est presque verticale, tandis que la section dans laquelle sont placés l'échangeur 36 et le volet 38 est inclinée vers l'avant du véhicule.

Le conduit supérieur 22 et le conduit inférieur 24 alimentent respectivement une chambre de sortie supérieure 42 et une chambre de sortie inférieure 44. Les chambres 42 et 44 sont reliées entre elles par un passage de communication 46 qui peut être ouvert ou fermé par le volet 38. Dans la position de la figure 1, ce passage 46 est ouvert.

La chambre de sortie supérieure 42 communique avec une chambre d'aération 48 au travers d'un volet d'aération 50 monté pivotant autour d'un axe 52. La chambre 48 alimente des buses d'aération 54 placées à l'avant de l'habitacle, au niveau de la planche de bord P, et un conduit d'aération arrière 56 menant à des buses d'aération arrière 58 situées à l'arrière de l'habitacle. Dans la position de la figure 1, le volet 52 ferme l'accès à la chambre d'aération 48, si bien qu'aucun flux d'air n'est envoyé vers les buses d'aération avant et vers les buses d'aération arrière.

Les buses d'aération avant 54 comportent des volets de réglage de débit (non représentés) actionnés par une molette 60. La chambre de sortie inférieure 44 communique, d'une part, avec un conduit de dégivrage/désembuage 62 et, d'autre part, à un conduit de chauffage 64 situé en partie basse de l'habitacle. Le conduit 62 alimente des buses de dégivrage/désembuage 66 (représentées schématiquement sur la figure 1), dirigées vers des glaces latérales du véhicule. Dans l'exemple, le pare-brise du véhicule (non représenté) peut être dégivré ou désembué par une résistance électrique.

Le conduit de chauffage 64 débouche sur au moins une buse 68 dirigée en partie basse à l'avant de l'habitacle et au moins une buse 70 dirigée en partie basse et à l'arrière de l'habitacle.

Un volet de répartition commun 72, monté pivotant autour d'un axe 74, est placé à la jonction de la chambre 44 et des conduits 62 et 64 pour répartir le flux d'air issu de la chambre 44 entre les deux conduits 62 et 64. Dans l'exemple, le volet 72 ferme l'accès au conduit de chauffage 64, si bien que l'air issu de la chambre 44 est envoyé uniquement vers le conduit de dégivrage/désembuage 62.

L'échangeur de chaleur supérieur 30 et l'échangeur de chaleur inférieur 36 sont parcourus par un même fluide caloporteur, dans l'exemple le liquide de refroidissement du moteur du véhicule. Les deux échangeurs sont montés en série dans un même circuit du fluide caloporteur et il est prévu un robinet hacheur 76 piloté par un micro-moteur 78 pour régler le débit du fluide caloporteur parcourant les deux échangeurs de chaleur et, par conséquent, la température des deux flux d'air pénétrant dans les chambres de sortie 42 et 44.

Une sonde de température 80 est disposée dans le trajet du flux F2, en aval de l'échangeur 36, pour détecter la température du flux d'air. La sonde 80 envoie un signal de température à un calculateur 82 qui pilote le micro-moteur 78 du robinet hacheur et qui pilote également le pivotement des volets 32 et 38 en fonction de lois préétablies, comme on le verra plus loin.

Dans la position représentée à la figure 1, qui correspond à un mode de fonctionnement de dégivrage/désembuage en consigne "hiver", le flux d'air chaud F1 reçu dans la chambre de sortie supérieure 42 se mêle au flux d'air chaud F2 reçu dans la chambre de sortie 44, et le flux d'air chaud ainsi obtenu est dirigé uniquement vers les buses de dégivrage/désembuage 66.

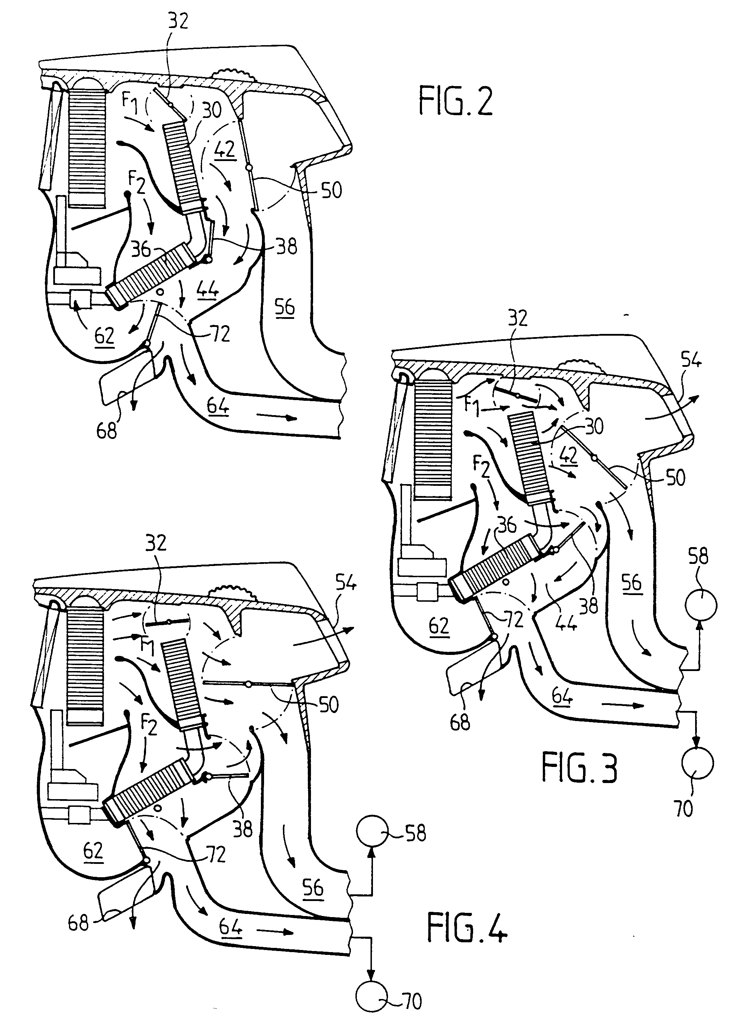

Dans la position représentée à la figure 2, le dispositif est dans un mode dégivrage/désembuage et chauffage en consigne "hiver". Les volets 32, 38 et 52 occupent les mêmes positions que dans la figure 1. Toutefois, le volet de répartition 72 est dans une position intermédiaire, si bien que le flux d'air chaud est envoyé pour moitié vers le conduit de dégivrage/désembuage 62 et pour moitié vers le conduit de chauffage 64.

Dans la position de la figure 3 qui correspond à une consigne "demi-saison", le volet supérieur 32 est en position ouverte, si bien que le flux d'air F1 passe en partie au travers de l'échangeur de chaleur supérieur 30 et en partie au travers de la section ouverte par le volet. La chambre de sortie supérieure 42 reçoit ainsi un mélange d'air frais et d'air chaud.

Le volet inférieur 38 est dans une position entrouverte, si bien que le flux d'air F2 passe en partie au travers de l'échangeur de chaleur inférieur 36 et en partie au travers de la section découverte par le volet 38. Ce dernier ferme partiellement la communication 46 entre les chambres 42 et 44. En outre, le volet d'aération 50 est entrouvert, tandis que le volet de répartition 72 ferme l'accès au conduit de dégivrage/désembuage 62. Le mode de fonctionnement de la figure 3 correspond à une position "aération/chauffage", encore appelée "bi-level" (terme anglo-saxon), qui permet d'envoyer un flux d'air tempéré vers les buses d'aération avant 54 et arrière 58 et un flux d'air plus chaud vers les buses de chauffage avant 68 et arrière 70 placées en partie inférieure de l'habitacle, au niveau des pieds des occupants du véhicule.

Dans la position de la figure 4, correspondant à une consigne "été", le volet supérieur 32 est en position ouverte, tandis que le volet inférieur 38 est dans une position d'ouverture du conduit inférieur 24 et de fermeture de la communication 46 entre les deux chambres de sortie. Le volet de répartition 72 est dans la même position que précédemment et ferme l'accès au conduit de dégivrage/désembuage 62.

Dans les positions des figures 1 à 3, le robinet hacheur est ouvert plus ou moins pour assurer le réchauffage des flux d'air F1 et F2 en fonction des informations du calculateur.

Par contre, dans la position de la figure 4, le robinet hacheur est fermé, si bien que les deux flux d'air F1 et F2 ne sont pas réchauffés. Le flux F1 est dirigé vers les buses d'aération avant 54 et vers les buses d'aération arrière 58. Le flux F2 parvenant à la chambre de sortie 44 est envoyé aux buses de sortie 68 et 70.

Dans cette position, le dispositif de climatisation est mis en marche, si bien que de l'air climatisé est envoyé vers les buses d'aération et également vers les buses de sortie pieds placées à l'avant et à l'arrière de l'habitacle.

Dans les différentes configurations précitées, les consignes sont ajustées en fonction du point de confort souhaité, et ce en liaison avec les conditions climatiques extérieures au véhicule.

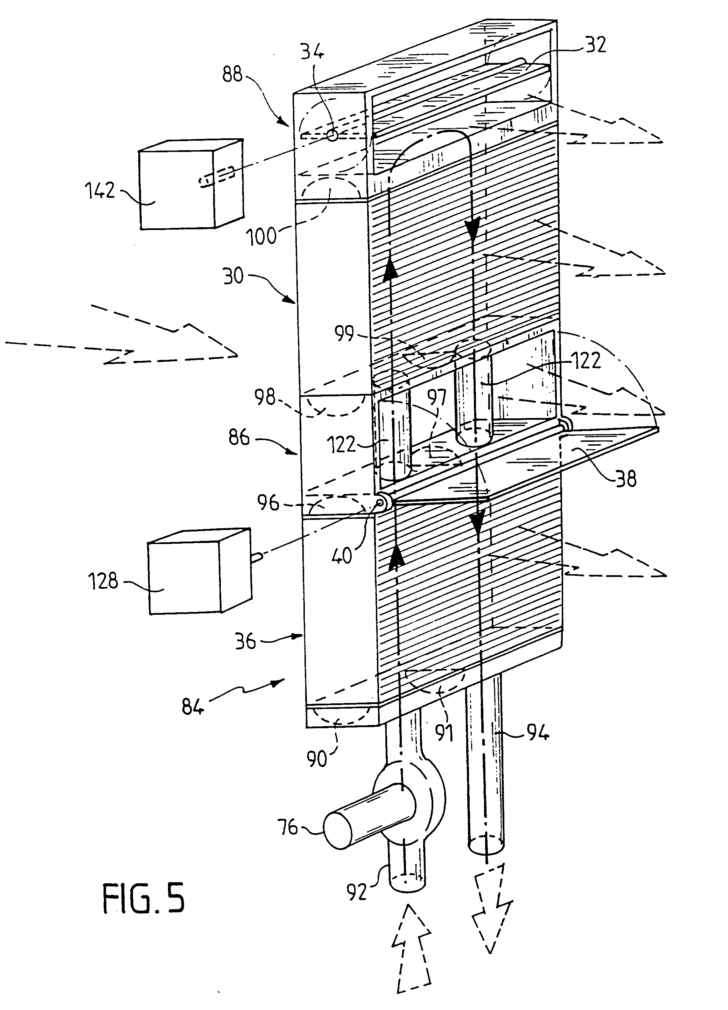

On se réfère maintenant à la figure 5 qui représente un module 84 regroupant, dans un ensemble unitaire, l'échangeur de chaleur supérieur 30, l'échangeur de chaleur inférieur 36, un élément inférieur intermédiaire 86 reliant les deux échangeurs de chaleur et incluant le volet inférieur 38, ainsi qu'un élément supérieur 88 monté sur l'échangeur de chaleur supérieur 30 et incluant le volet supérieur 32.

L'échangeur de chaleur inférieur 36 comprend une boîte collectrice inférieure 90 munie d'une cloison interne 91, d'une tubulure d'entrée 92 sur laquelle est monté le robinet hacheur 76 et d'une tubulure de sortie 94.

L'échangeur 36 comprend en outre une boîte collectrice supérieure 96 qui est munie d'une cloison interne 97 et qui est raccordée de façon étanche à l'élément inférieur 86. Ce dernier se raccorde, également de façon étanche, à une boîte collectrice inférieure 98 de l'échangeur de chaleur supérieur 30, ce dernier étant muni d'une boîte collectrice supérieure 100 sur laquelle est monté l'élément supérieur 88. La boîte collectrice infériure 96 est munie d'une cloison interne 99.

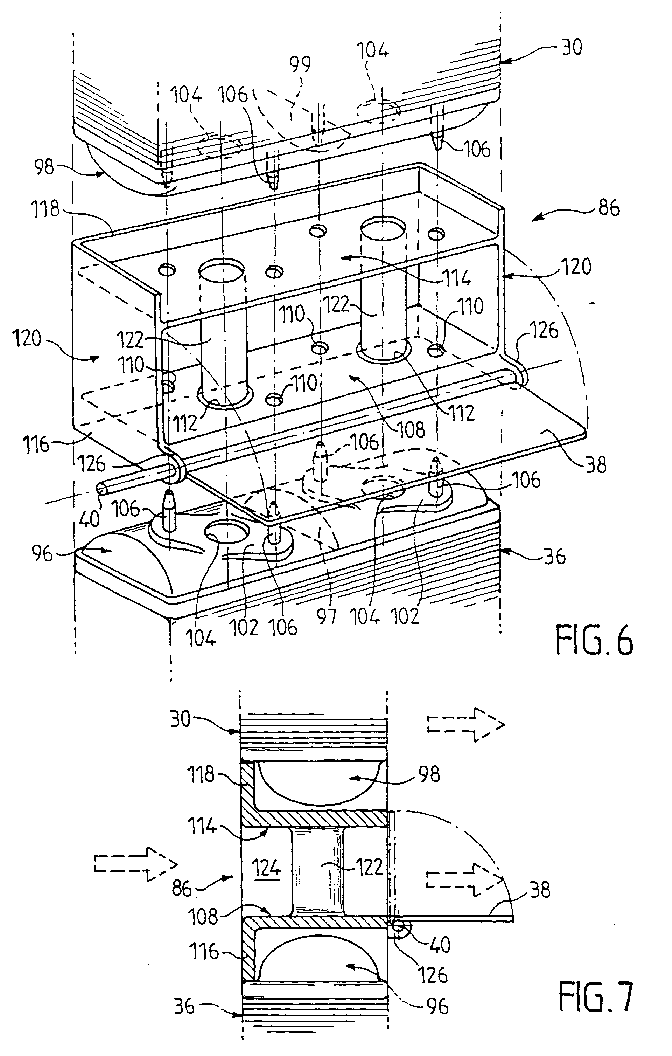

On décrira maintenant l'élément inférieur 86 et son mode de raccordement aux deux échangeurs de chaleur, en référence aux figures 6 et 7.

La boîte collectrice 96 comporte deux brides 102 coplanaires pourvues chacune d'une ouverture centrale 104 et munies chacune de deux goujons de fixation 106.

La boîte collectrice inférieure 98 de l'échangeur de chaleur 30 comporte des brides analogues pourvues d'ouvertures et de goujons de fixation analogues.

L'élément inférieur 86 est moulé d'une seule pièce et réalisé sous la forme d'un cadre ouvert qui comprend une plaque inférieure adaptatrice 108 propre à être immobilisée contre la boîte collectrice supérieure 96 et comportant deux paires de trous 110 propres à recevoir les goujons de fixation 106 et deux ouvertures 112 propres à correspondre avec les ouvertures 104 de la boîte collectrice 96. L'élément 86 comprend en outre une plaque supérieure adaptatrice 114 propre à être assujettie à la boîte collectrice inférieure 98 de l'échangeur 30. Cette plaque 114 est analogue à la plaque 108 et comprend également deux paires de trous 110 et deux ouvertures 112 alignées avec celles de la plaque 108.

Les plaques adaptatrices 108 et 114 sont de forme rectangulaire et bordées chacune, sur trois côtés, respectivement par un rebord 116 et 118.

Les plaques adaptatrices 108 et 114 sont reliées entre elles par deux flasques opposés 120 qui prolongent les petits côtés des rebords 116 et 118.

L'élément 86 comprend en outre deux conduits de passage 122 qui relient les deux plaques 108 et 114 et débouchent sur celles-ci au travers des ouvertures 112. Les conduits 122 sont destinés à permettre le passage du fluide caloporteur entre les deux échangeurs 30 et 36.

Les plaques 108 et 114 délimitent avec les flasques latéraux 120 un passage d'air inférieur 124 (figure 7) qui est contrôlé par le volet inférieur 38. Ce dernier est un volet de type drapeau et son axe 40 est monté à ses deux extrémités sur des paliers 126 prolongeant le rebord 116.

Comme on le voit à la figure 5, le pivotement du volet 38 est assuré par un micro-moteur 128, lui-même piloté par le calculateur 82.

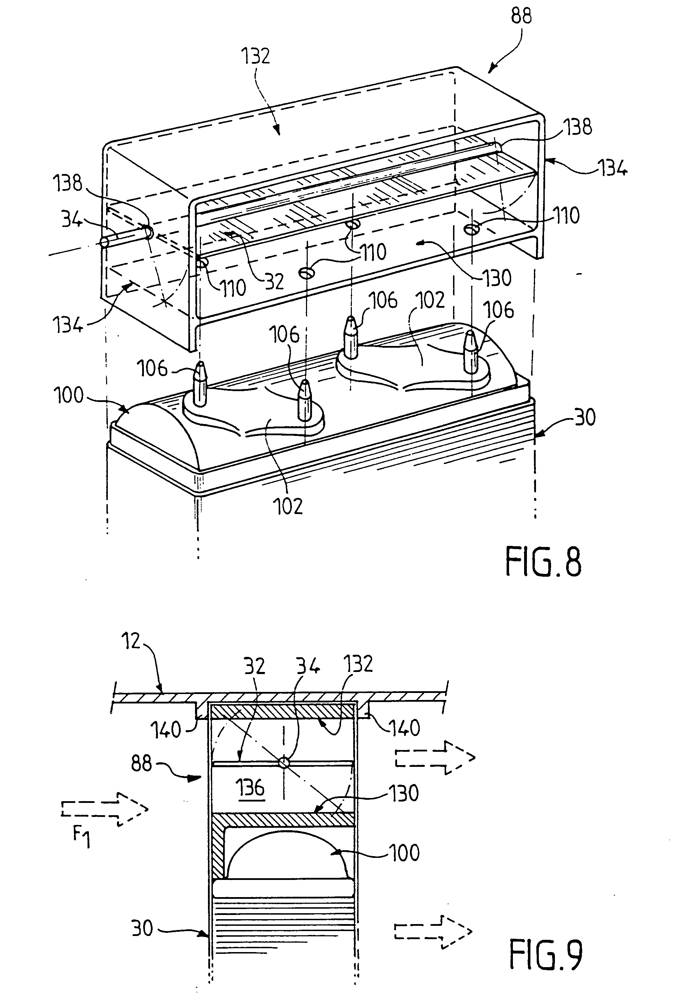

On se réfère maintenant aux figures 8 et 9 pour décrire l'élément supérieur 88. Ce dernier est un ensemble monobloc obtenu par moulage, par exemple d'une matière plastique, et réalisé sous la forme d'un cadre ouvert qui comprend une plaque inférieure adaptatrice 130 propre à être immobilisée contre la boîte collectrice supérieure 100 de l'échangeur de chaleur supérieur 30 et comprenant deux paires de trous 110 propres à recevoir des goujons de fixation 106 montés en saillie sur des brides 102 de la boîte collectrice 100. Toutefois, à la différence des brides des boîtes collectrices 96 et 98, les brides de la boîte collectrice 100 ne comportent pas d'ouverture centrale.

L'élément supérieur 88 comprend en outre une plaque supérieure opposée 132, également de forme rectangulaire, ainsi que deux flasques latéraux 134 reliant entre elles les plaques 130 et 132 pour définir avec elles un passage d'air supérieur 136 (figure 9) propre à être traversé par le flux F1. Le passage 136 est contrôlé par le volet 32 qui est de type papillon et dont l'axe 34 s'engage dans des trous 138 ménagés en vis-à-vis dans les flasques 134 pour former paliers. Comme on le voit sur la figure 9, la plaque supérieure 132 vient en appui contre la paroi supérieure 12 du boîtier du dispositif et est retenue contre cette paroi par deux nervures opposées 140.

L'axe 34 du volet 32 est couplé à un micro-moteur 142, lequel est piloté par le calculateur 82 en fonction de lois préétablies. Ainsi, le calculateur pilote à la fois les deux volets 32 et 38 par l'intermédiaire de leurs micro-moteurs respectifs 142 et 128.

Dans la forme de réalisation des figures 1 à 4, les conduits 122 reliant les deux échangeurs de chaleur sont coudés, ce qui permet une disposition superposée mais non alignée des deux échangeurs de chaleur. Par contre, dans la forme de réalisation des figures 5 à 9, les conduits 122 sont rectilignes, ce qui permet une disposition superposée et alignée des deux échangeurs de chaleur.

Comme on le voit sur la figure 5, le fluide caloporteur pénètre dans l'échangeur de chaleur 36 au travers de la tubulure 92 puis dans l'échangeur de chaleur 30 au travers de l'un des conduits 122 avant de regagner l'échangeur de chaleur 36 au travers de l'autre conduit 122 et de quitter cet échangeur de chaleur par la tubulure de sortie 94. La présence des cloisons internes 91, 97 et 99 dans les boîtes collectrices respectives 90, 96 et 98 permet une telle circulation. Le robinet hacheur 76 permet de régler le débit du fluide caloporteur qui parcourt les deux échangeurs de chaleur et, par conséquent, la température de l'air en sortie des deux échangeurs de chaleur.

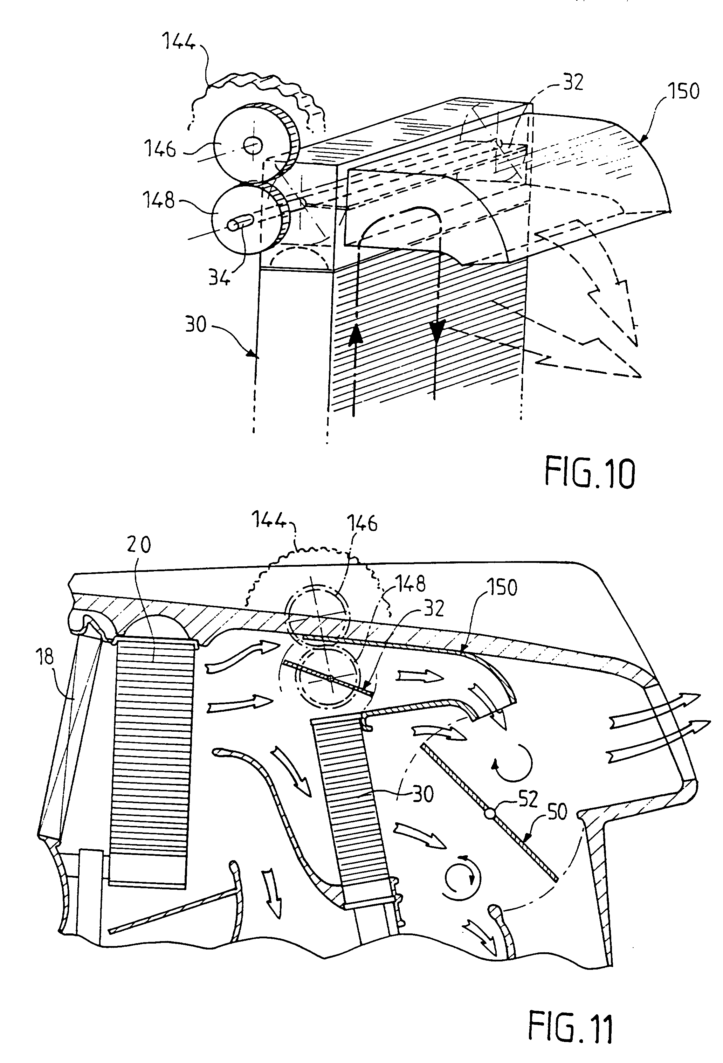

On se réfère maintenant à la figure 10 qui montre une variante de réalisation du module 84. Ce dernier est sensiblement identique à celui de la figure 5, si ce n'est que le volet supérieur 32 est à commande manuelle, au lieu d'être entraîné par un micro-moteur. Une molette 144 est solidaire en rotation d'une roue dentée 146 qui engrène avec une roue dentée 148 calée sur l'axe 34 du volet 32.

Le volet inférieur 38 est actionné par un micro-moteur 128 comme dans la figure 5.

En outre, le volet supérieur 32 contrôle l'accès à un conduit spécifique 150 qui débouche directement dans les conduits d'aération logés dans la planche de bord, comme on le voit sur la figure 11 qui correspond au dispositif en position demi-saison, analogue à celle de la figure 3.

Le module de l'invention constitue un ensemble de structure compacte sur lequel il est possible d'intervenir facilement pour la maintenance en cas d'incidents.

Le dispositif de l'invention permet de moduler la température de l'air soufflé dans l'habitacle suivant une loi préétablie grâce au calculateur 82 qui pilote le robinet hacheur 76 et qui pilote également le volet inférieur 38. Le volet supérieur 32 peut, comme indiqué précédemment, être soit contrôlé par le calculateur 82, soit être commandé manuellement.

Le dispositif de l'invention permet en outre de modifier instantanément le point de confort de la diffusion de l'aération avant.

## Revendications

1. Dispositif de chauffage et/ou de climatisation de l'habitacle d'un véhicule automobile, comprenant :
- un conduit supérieur (22) et un conduit inférieur (24) superposés et alimentés en parallèle par une entrée d'air commune (16);
- un échangeur de chaleur supérieur (30) et un volet supérieur mobile (32) occupant respectivement deux parties complémentaires d'une section transversale du conduit supérieur (22);
- un échangeur de chaleur inférieur (36) et un volet inférieur mobile (38) occupant respectivement deux parties complémentaires d'une section transversale du conduit inférieur (24);
caractérisé en ce qu'il comprend en plus :
- au moins une chambre de sortie (42, 44) alimentée par le conduit supérieur (22) et par le conduit inférieur (24); et
- des buses de distribution d'air (54, 58, 68, 70) alimentées par la chambre de sortie et débouchant en des endroits choisis de l'habitacle (H).

2. Dispositif selon la revendication 1, caractérisé en ce qu'il comprend une chambre de sortie supérieure (42) et une chambre de sortie inférieure (44) alimentées respectivement par le conduit supérieur (22) et le conduit inférieur (24), et en ce qu'il est prévu un volet de séparation (38) mobile propre à ouvrir ou fermer une communication (46) entre les deux chambres de sortie (42, 44).

3. Dispositif selon la revendication 2, caractérisé en ce que le volet de séparation est formé par le volet inférieur (38) qui ouvre ou ferme la communication (46) entre les deux chambres de sortie (42, 44) lorsqu'il ferme ou respectivement ouvre la partie de la section transversale du conduit inférieur (24) qu'il occupe.

4. Dispositif selon l'une des revendications 2 et 3, caractérisé en ce que la chambre de sortie supérieure (42) alimente des buses d'aération (54, 58) au moyen d'un volet d'aération réglable (50).

5. Dispositif selon la revendication 4, caractérisé en ce que les buses d'aération comprennent des buses d'aération (54) placées à l'avant de l'habitacle et des buses d'aération (58) placées à l'arrière de l'habitacle.

6. Dispositif selon l'une des revendications 2 à 5, caractérisé en ce que la chambre de sortie inférieure (44) alimente des buses de dégivrage/désembuage de vitre (66) et des buses de chauffage (68, 70) au moyen d'un volet de répartition commun (72).

7. Dispositif selon l'une des revendications 1 à 6, caractérisé en ce que l'échangeur de chaleur supérieur (30) et l'échangeur de chaleur inférieur (36) sont parcourus par un même fluide caloporteur.

8. Dispositif selon la revendication 7, caractérisé en ce que l'échangeur de chaleur supérieur (30) et l'échangeur de chaleur inférieur (36) sont montés en série dans un même circuit du fluide caloporteur, et en ce qu'il est prévu un robinet hacheur (76) propre à régler le débit du fluide caloporteur parcourant les deux échangeurs de chaleur et par conséquent la température des flux d'air (F1, F2) ayant traversé les échangeurs de chaleur.

9. Dispositif selon la revendication 8, caractérisé en ce qu'il comprend un calculateur (82) recevant un signal de température d'une sonde de température (80) placée en aval de l'échangeur de chaleur inférieur (36) et en ce que le calculateur (82) pilote le robinet hacheur (76) et commande l'un au moins du volet supérieur (32) et du volet inférieur (38).

10. Dispositif selon la revendication 9, caractérisé en ce que le calculateur (82) pilote le volet supérieur (32) et le volet inférieur (38) par l'intermédiaire de micro-moteurs respectifs (142, 128).

11. Dispositif selon la revendication 9, caractérisé en ce que le calculateur (82) pilote le volet inférieur (38) par l'intermédiaire d'un micro-moteur (128), tandis que le volet supérieur (32) est relié à une commande manuelle (144) et contrôle l'accès à un conduit spécifique (150) débouchant directement dans des conduits d'aération logés dans la planche de bord (P) du véhicule.

12. Dispositif selon l'une des revendications 1 à 11, caractérisé en ce que l'échangeur de chaleur supérieur (30), l'échangeur de chaleur inférieur (36), ainsi que le volet supérieur (32) et le volet inférieur (38) font partie d'un module (84).

13. Dispositif selon la revendication 12, caractérisé en ce que le module (84) comprend :
- un élément inférieur intermédiaire (86) qui est propre à être interposé entre une boîte collectrice supérieure (96) de l'échangeur de chaleur inférieur (36) et une boîte collectrice inférieure (98) de l'échangeur de chaleur supérieur (30), qui définit un passage d'air inférieur (124), qui porte à pivotement le volet inférieur (38) pour contrôler ledit passage d'air inférieur et qui comprend deux passages de fluide (122) reliant les deux boîtes collectrices précitées; et
- un élément supérieur (88) qui est propre à être monté sur une boîte collectrice supérieure (100) de l'échangeur de chaleur supérieur (30), qui définit un passage d'air supérieur (136) et qui porte à pivotement le volet supérieur (32) pour contrôler le passage d'air supérieur.

14. Dispositif selon la revendication 13, caractérisé en ce que l'élément inférieur (86) est réalisé sous la forme d'un cadre ouvert qui comprend :
- une plaque inférieure adaptatrice (108) propre à être immobilisée contre la boîte collectrice supérieure (96) de l'échangeur de chaleur inférieur (36);
- une plaque supérieure adaptatrice (114) propre à être immobilisée contre la boîte collectrice inférieure (98) de l'échangeur de chaleur supérieur (30);
- deux flasques latéraux (120) reliant entre elles la plaque inférieure (108) et la plaque supérieure (114) pour définir avec elles le passage d'air inférieur (124):
- deux conduits de passage de fluide caloporteur (122) interposés entre la plaque inférieure (108) et la plaque supérieure (114); et
- des paliers supports (126) du volet inférieur (38).

15. Dispositif selon la revendication 13, caractérisé en ce que l'élément supérieur (88) est réalisé sous la forme d'un cadre ouvert qui comprend :
- une plaque inférieure adaptatrice (130) propre à être immobilisée contre la boîte collectrice supérieure (100) de l'échangeur de chaleur supérieur (30);
- une plaque supérieure opposée (132);
- deux flasques latéraux (134) reliant entre elles la plaque inférieure (130) et la plaque supérieure (132) pour définir avec elles le passage d'air supérieur (136); et
- des paliers supports (138) du volet supérieur (32).

## Patentansprüche

1. Kraftfahrzeuginnenraum- Heiz- und/oder -Klimaanlage, umfassend
- einen oberen Kanal (22) und einen unteren Kanal (24), die einander überlagert sind und parallel über einen gemeinsamen Lufteintritt (16) versorgt werden;
- einen oberen Wärmetauscher (30) und eine obere bewegliche Klappe (32), die jeweils zwei komplementäre Abschnitte eines Querschnitts des oberen Kanals (22) einnehmen;
- einen unteren Wärmetauscher (36) und eine untere bewegliche Klappe (38), welche jeweils zwei komplementäre Abschnitte eines Querschnitts des unteren Kanals (24) einnehmen;
dadurch gekennzeichnet, dass die Anlage ferner umfasst:
- zumindest eine Austrittskammer (42, 44), welche von dem oberen Kanal (22) und dem unteren Kanal (24) gespeist wird; und
- Luftverteilungsausströmer (54, 58, 68, 70), die von der Austrittskammer versorgt werden und an gewählten Orten des Innenraums (H) münden.

2. Anlage nach Anspruch 1, dadurch gekennzeichnet, dass sie eine obere Austrittskammer (42) und eine untere Austrittskammer (44) umfasst, jeweils von dem oberen Kanal (22) und dem unteren Kanal (24) versorgt, und dass eine bewegliche Trennklappe (38) vorgesehen ist, welche eine Verbindung (46) zwischen den zwei Austrittskammern (42, 44) öffnen oder schließen kann.

3. Anlage nach Anspruch 2, dadurch gekennzeichnet, dass die Trennklappe durch die untere Klappe (38) gebildet ist, welche die Verbindung (46) zwischen den zwei Austrittskammern (42, 44) öffnet oder schließt, wenn sie jeweils den Querschnitt des unteren Kanals (24), den sie einnimmt, schließt bzw. öffnet.

4. Anlage nach einem der Ansprüche 2 und 3, dadurch gekennzeichnet, dass die obere Austrittskammer (42) Belüftungsausströmer (54, 58) mittels einer einstellbaren Belüftungsklappe (50) versorgt.

5. Anlage nach Anspruch 4, dadurch gekennzeichnet, dass die Belüftungsausströmer Belüftungsausströmer (54) umfassen, die im vorderen Abschnitt des Innenraums angeordnet sind, sowie Belüftungsausströmer (58), die im hinteren Bereich des Innenraums angeordnet sind.

6. Anlage nach einem der Ansprüche 2 bis 5, dadurch gekennzeichnet, dass die untere Austrittskammer (44) Scheibenentfrostungs-/-Beschlagsreduzierungsausströmer (66) und Heizausströmer (68, 70) mittels einer gemeinsamen Verteilerklappe (72) versorgt.

7. Anlage nach einem der Ansprüche 1 bis 6, dadurch gekennzeichnet, dass der obere Wärmetauscher (30) und der untere Wärmetauscher (36) von ein und demselben Wärmeträgerfluid durchquert oder durchströmt werden.

8. Anlage nach Anspruch 7, dadurch gekennzeichnet, dass der obere Wärmetauscher (30) und der untere Wärmetauscher (36) in Serie in ein und demselben Wärmeträgerfluidkreis montiert sind und dass ein Zerhacker- bzw. Unterbrecherhahn oder -ventil (76) vorgesehen ist, welcher bzw. welches den Wärmeträgerfluiddurchsatz, welcher die zwei Wärmetauscher durchläuft, und demzufolge die Temperatur der Luftströme (F1, F2), die die Wärmetauscher durchquert haben, einstellen, steuern oder regeln kann.

9. Anlage nach Anspruch 8, dadurch gekennzeichnet, dass sie einen Rechner (82) umfasst, der ein Temperatursignal von einem Temperatursensor (80) empfängt, der flußabwärtsliegend des unteren Wärmetauschers (36) angeordnet ist, und dass der Rechner (82) den Zerhacker- bzw. Unterbrecherhahn bzw. -ventil (76) steuert und zumindest eine von der oberen Klappe (32) und der unteren Klappe (38) steuert.

10. Anlage nach Anspruch 9, dadurch gekennzeichnet, dass der Rechner (82) die obere Klappe (32) und die untere Klappe (38) unter Zwischenschaltung von jeweiligen Mikromotoren (142, 128) steuert.

11. Anlage nach Anspruch 9, dadurch gekennzeichnet, dass der Rechner (82) die untere Klappe (38) unter Zwischenschaltung eines Mikromotors (128) steuert, während die obere Klappe (32) mit einer manuellen Steuerung (144) verbunden ist und den Zugriff auf einen spezifischen Kanal (150) steuert, welcher unmittelbar in den Belüftungskanälen mündet, die in dem Armaturenbrett (P) des Fahrzeugs aufgenommen sind.

12. Anlage nach einem der Ansprüche 1 bis 11, dadurch gekennzeichnet, dass der obere Wärmetauscher (30), der untere Wärmetauscher (36), sowie die obere Klappe (32) und die untere Klappe (38) Teile eines Moduls (84) sind.

13. Anlage nach Anspruch 12, dadurch gekennzeichnet, dass das Modul (84) umfasst:
- ein unteres zwischengelagertes Element (86), welches zwischengelagert werden kann zwischen einem oberen Sammlergehäuse (96) des unteren Wärmetauschers (36) und einem unteren Sammlergehäuse (98) des oberen Wärmetauschers (30), welches einen unteren Luftdurchtritt (124) definiert, welches schwenkbar die untere Klappe (38) zur Steuerung des unteren Luftdurchtrittes stützt und welches zwei Fluiddurchtritte (122) umfasst, die die zwei voran genannten Sammlergehäuse verbinden; und
- ein oberes Element (88), welches an einem oberen Sammlergehäuse (100) des oberen Wärmetauschers (30) montiert werden kann, welches einen oberen Luftdurchtritt (136) definiert und welches schwenkbar die obere Klappe (32) zur Steuerung des oberen Luftdurchtrittes stützt.

14. Anlage nach Anspruch 13, dadurch gekennzeichnet, dass das untere Element (86) in der Form eines offenen Rahmens dargestellt ist, welcher umfasst:
- eine untere Adapterplakette (108), die an dem oberen Sammlergehäuse (86) des unteren Wärmetausches (36) befestigt werden kann;
- eine obere Adapterplakette (114), welche an dem unteren Sammlergehäuse (98) des oberen Wärmetauschers (30) befestigt werden kann;
- zwei Lateralflansche (120), die die untere Plakette (108) und die obere Plakette (114) miteinander verbinden, um mit diesen den unteren Luftdurchtritt (124) zu definieren;
- zwei Wärmeträgerfluiddurchtrittsleitungen (122), zwischengelagert zwischen der unteren Plakette (108) und der oberen Plakette (114); und
- Stützlager (126) der unteren Klappe (38).

15. Anlage nach Anspruch 13, dadurch gekennzeichnet, dass das obere Element (88) in der Form eines offenen Rahmens dargestellt ist, welcher umfasst:
- eine untere Adapterplakette (130), die an dem oberen Sammlergehäuse (100) des oberen Wärmetauschers (30) befestigt werden kann;
- eine obere, gegenüberstehende Plakette (132);
- zwei Lateralflansche (134), welche die untere Plakette (130) und die obere Plakette (132) miteinander verbinden, um mit diesen den oberen Luftdurchtritt (136) zu definieren; und
- Stützlager (138) der oberen Klappe (32).

## Claims

1. Device for heating and/or air-conditioning the passenger compartment of a motor vehicle, comprising:
- an upper duct (22) and a lower duct (24) which are superimposed and fed in parallel by a common air intake (16),
- an upper heat exchanger (30) and a moveable upper flap (32), respectively occupying two complementary parts of a cross section of the upper duct (22) ;
- a lower heat exchanger (36) and a moveable lower flap (38) respectively occupying two complementary parts of a cross section of the lower duct (24) ;
characterised in that it further comprises:
- at least one outlet chamber (42, 44) fed by the upper duct (22) and by the lower duct (24) ; and
- air-distribution vents (54, 58, 68, 70) fed by the outlet chamber and opening out at chosen places in the passenger compartment (H).

2. Device according to Claim 1, characterised in that it comprises an upper outlet chamber (42) and a lower outlet chamber (44) which are fed respectively by the upper duct (22) and by the lower duct (24), and in that a moveable separation flap (38) is provided, able to open or close a communication (46) between the two outlet chambers (42, 44).

3. Device according to Claim 2, characterised in that the separation flap is formed by the lower flap (38), which opens or closes the communication (46) between the two outlet chambers (42, 44) when it closes or respectively opens the part of the cross section of the lower duct (24) which it occupies.

4. Device according to either of Claims 2 and 3, characterised in that the upper outlet chamber (42) feeds aeration vents (54, 58) by means of an adjustable aeration flap (50).

5. Device according to Claim 4, characterised in that the aeration vents comprise aeration vents (54) placed at the front of the passenger compartment and aeration vents (58) placed at the rear of the passenger compartment.

6. Device according to one of Claims 2 to 5, characterised in that the lower outlet chamber (44) feeds window de-icing/de-misting vents (66) and heating vents (68, 70), by means of a common distribution flap (72).

7. Device according to one of Claims 1 to 6, characterised in that the upper heat exchanger (30) and the lower heat exchanger (36) are traversed by the same heat-carrying fluid.

8. Device according to Claim 7, characterised in that the upper heat exchanger (30) and the lower heat exchanger (36) are mounted in series in the same circuit of the heat-carrying fluid, and in that a chopper valve (76) is provided, able to adjust the throughput of the heat-carrying fluid traversing the two heat exchangers, and consequently the temperature of the airflows (F1, F2) having passed through the heat exchangers.

9. Device according to Claim 8, characterised in that it comprises a computer (82) receiving a temperature signal from a temperature probe (80) placed downstream of the lower heat exchanger (36), and in that the computer (82) drives the chopper valve (76) and controls at least one of the upper flap (32) and lower flap (38).

10. Device according to Claim 9, characterised in that the computer (82) drives the upper flap (32) and the lower flap (38) by means of respective micro-motors (142, 128).

11. Device according to Claim 9, characterised in that the computer (82) drives the lower flap (38) by means of a micro-motor (128), while the upper flap (32) is linked to a manual control (144) and controls access to a specific duct (150) opening out directly into aeration ducts housed in the dashboard (P) of the vehicle.

12. Device according to one of Claims 1 to 11, characterised in that the upper heat exchanger (30), the lower heat exchanger (36), as well as the upper flap (32) and the lower flap (38), form part of a module (84).

13. Device according to Claim 12, characterised in that the module (84) comprises:
- an intermediate lower element (86) which is able to be interposed between an upper manifold (96) of the lower heat exchanger (36) and a lower manifold (98) of the upper heat exchanger (30), which defines a lower air passage (124), which carries the lower flap (38), such that it can pivot, in order to control the said lower air passage and which comprises two fluid passages (122) linking the two abovementioned manifolds; and
- an upper element (88) which is able to be mounted on an upper manifold (100) of the upper heat exchanger (30), which defines an upper air passage (136), and which carries the upper flap (32), such that it can pivot, in order to control the upper air passage.

14. Device according to Claim 13, characterised in that the lower element (86) is produced in the form of an open frame which comprises:
- a lower adapter plate (108) able to be immobilised against the upper manifold (96) of the lower heat exchanger (36) ;
- an upper adapter plate (114) able to be immobilised against the lower manifold (98) of the upper heat exchanger (30);
- two lateral flanges (120) linking the lower plate (108) and the upper plate (114) together so as to define with them the lower air passage (124);
- two heat-carrying fluid passage ducts (122) interposed between the lower plate (108) and the upper plate (114); and
- support bearings (126) for the lower flap (38).

15. Device according to Claim 13, characterised in that the upper element (88) is produced in the form of an open frame which comprises:
- a lower adapter plate (130) able to be immobilised against the upper manifold (100) of the upper heat exchanger (30);
- an opposed upper plate (132);
- two lateral flanges (134) linking the lower plate (130) and upper plate (132) together so as to define with them the upper air passage (136); and
- support bearings (138) for the upper flap (32).
